# EUROPEAN PATENT SPECIFICATION

(11) **EP 1 884 456 B1**
(45) Date of publication and mention of the grant of the patent: **15.07.2009**
(21) Application number: 07014515.6
(22) Date of filing: 25.07.2007
(51) Int. Cl.: B62J 15/02

(54) **Device for fixing the mudguards of cycles at the upper end of a mudguard support bracket rod**
Vorrichtung zum Befestigen von Fahrradschutzblechen am oberen Ende eines Auflagewinkelstabs
Dispositif de fixation de garde-boue de bicyclettes à la partie supérieure d'une tige de fixation de support de garde-boue

(30) Priority: 28.07.2006 IT PD20060295
(43) Date of publication of application: 06.02.2008
(73) Proprietor: NEW ORION S.R.L., 35018 San Martino di Lupari (PD) (IT)
(72) Inventor: Silvestri, Alberto, 35100 Padova PD (IT)
(74) Representative: Modiano, Micaela Nadia

(56) References cited:
- EP-A- 1 331 165
- DE-U1- 20 008 005

## Description

The case in question regards the fixing of the free end of the mudguard support bracket rod on the mudguard without the presence of the U-bolt applied to the mudguard and so with the use of double grip devices both on the rim of the mudguard as well as on the upper end of the mudguard support bracket rods.

It should be noted that the double grip device is made of elastically pliant resinous material and the mudguard support bracket rod is made of metal. The appearance of the double grip clamps, both of the mudguard and of the mudguard support bracket rod, is quite variegated. The research undertaken by the manufacturers was aimed at finding solutions that would improve both the economic aspect of production as well as improved installation and efficiency.

The drawbacks of the various double grip clamps on the market regard either the difficulty of application, or the complexity of manufacturing, or else the ineffective gripping of the rods.

EP1 331 165 discloses a device for fixing mudguards of cycles, as defined in the preamble of claim 1.

DE 200 08 2005 also discloses a device for fixing mudguards of cycles.

The purpose of the invention is to overcome the drawbacks in the double grip devices on the market by achieving a device that is easy to make, easy to apply and that provides an effective grip.

The device of the invention is defined in claim 1 and is composed of two elements that are joined together.

The first element is composed of an upper part that has a mouth with an internal profile configured in conformity with the outer exterior strip with a flat band of the mudguard on which it should be installed, and a lower part in the form of a tubular shaft with a longitudinal slit that is fitted with protruding ribbing.

The second element is composed of a sleeve with interior longitudinal grooving whose width is slightly less than the width of the protruding ribbing of the tubular shaft with a slit, which is part of the first element described above.

The width of the grooving and the width of the ribbing have the same variation in inclination so that a wedging effect can be obtained.

In the upper most external part of the mouth of the first element there is a raised cylindrical section whose form and size are compatible for it being inserted in a hole in line with the outer strip of the mudguard.

This cylindrical shape ensures the correct position of the element mounted on the mudguard is both attained and maintained.

Once the element with the tubular shaft and slit is assembled on the mudguard the end of the rod (mudguard support bracket) is inserted into said shaft. You advance the sleeve with the internal longitudinal grooving above said shaft.

Because the side walls of the internal groove of the sleeve are diverging, so as to vary their width, and because the outer sides of the ribbing are also diverging (with the same inclination of the side walls of the grooving of the sleeve), so as to vary the width, and because the material of the tubular shaft is elastically flexible, the progression of the sleeve above the shaft causes the ribbing to come closer, reducing the space of the slit that separates them, bringing about a reduction of the section of the tubular cavity that pushes against the rod that has been inserted, gripping it.

Once the sleeve has stopped advancing above the tubular shaft with the slit, then the rod that has been inserted is fully gripped.

The main feature of said device is that it grips the rod in a uniform manner over its whole length, unlike the other gripping systems on the market.

Another characteristic of the device of the invention is the fact that the progressive strain on the ribbing of the shaft due to the engagement with the sleeve reduces the space that separates them and reduces as a consequence the cross-section of the cavity inside the shaft. This is obtained with a progressive advancement of the sleeve along the shaft with the side walls of the internal grooving of the sleeve being divergent next to the outer sides of the ribbing, they also being divergent between themselves, in conformity with the divergence of the sides of the grooving of the sleeve.

Once the head of the element with the tubular shaft and slit is assembled on the mudguard, and the end of the mudguard support bracket is inserted on the shaft, a partial advancement of the sleeve assembled on the shaft causes a moderate fixing of the rod. This facilitates the proper alignment of the mudguard with respect to the frame and the wheel before definitive locking is obtained with the full advancement of the sleeve along the shaft.

What has been shown until now can be clarified by examining the attached drawings.
Fig. 1 shows the front of the element with the head fitted with a mouth to be assembled on the rim of the mudguard and with a split tubular shaft that has external protruding lips.
Fig. 2 is an axonometric view of the element represented in fig. 1 viewed partially from the side.
Fig. 3 is an axonometric view of the element represented in fig. 1 viewed partially from the side and from below.
Fig. 4 is an axonometric view of the element represented in fig. 3 which shows the protruding external lips of the shaft in line with the longitudinal slit, and one can catch a glimpse of the longitudinal ribbing entirely set against the slit.
Fig. 5 is an axonometric view from the side and from below the sleeve with internal grooving to be assembled on the tubular shaft with the slit, the element represented in fig. 1.
Fig. 6 is the sleeve corresponding to fig. 5 viewed from the opposite side and from above. We can partially see the grooving in which the lips of the tubular shaft slide, and the grooving in which is the guide ribbing of the shaft opposite to the lips.

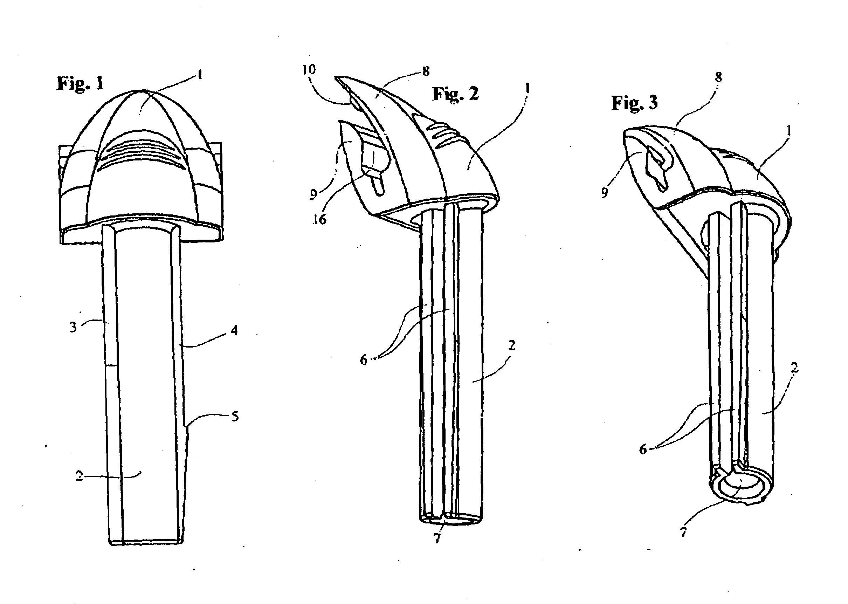

We can also note the upper appendage inside the the rim of the mudguard upon completion of the assembly on the shaft of the element in fig. 1.

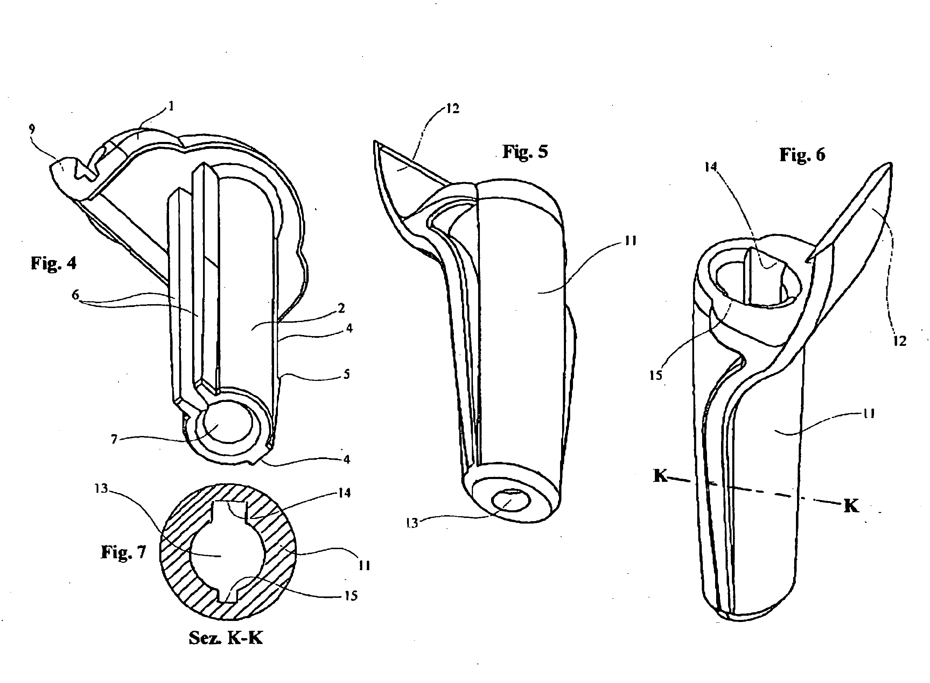

Fig. 7 is a cross-section view of the sleeve gripped in an intermediate position along the length of the sleeve represented in fig. 6.

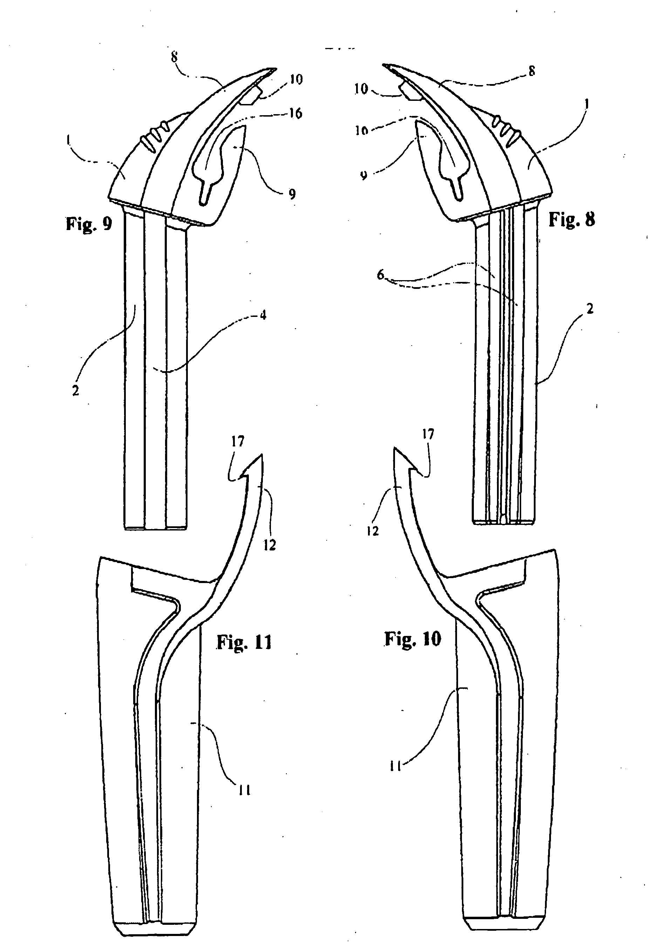

Fig. 8 shows the element represented with head and shaft in fig. 1 viewed from one side, while fig. 9 shows the element represented in fig. 8 shown from the opposite side. The two elements are in the position assumed when not assembled compared to when they are assembled on the sides of the mudguard.
Fig. 10 shows the sleeve seen laterally in position to be placed above the shaft of the element of fig. 8.
Fig. 11 shows the sleeve represented in fig. 10 seen on the opposite side in position to be placed above the shaft of the element represented in fig. 9.

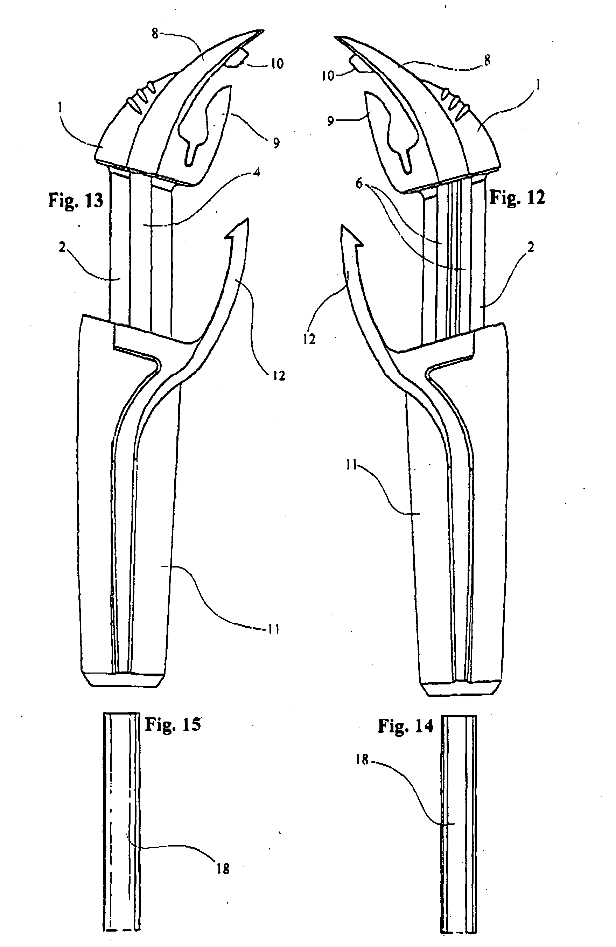

Fig. 12 represents the partial coupling of the shaft of the element in fig. 8 and the sleeve of fig. 10.
Fig. 13 represents the partial coupling of the shaft of the element of fig. 9 and the sleeve of fig. 11.
Figs. 14 and 15 represent portions of the mudguard support bracket rods to be inserted and held by the relative devices of figs. 12 and 13.

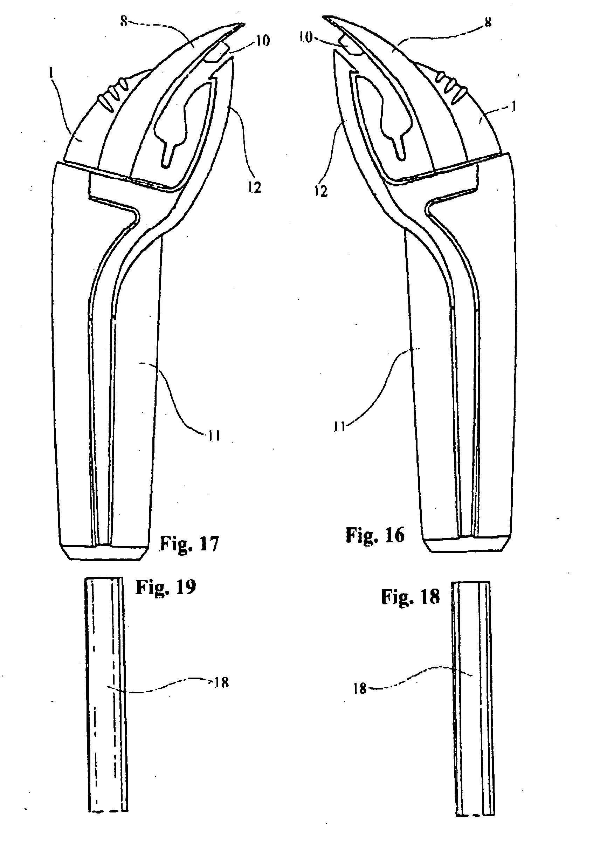

Fig. 16 represents the complete union of the shaft of the element of fig. 8 and the sleeve of fig. 10.
Fig. 17 represents the complete union of the shaft of the element of fig.9 and the sleeve of fig. 11.
Figs. 18 and 19 represent, as in figs. 14 and 15, parts of the mudguard support bracket rods to be inserted and held by the relative devices in figs. 16 and 17.

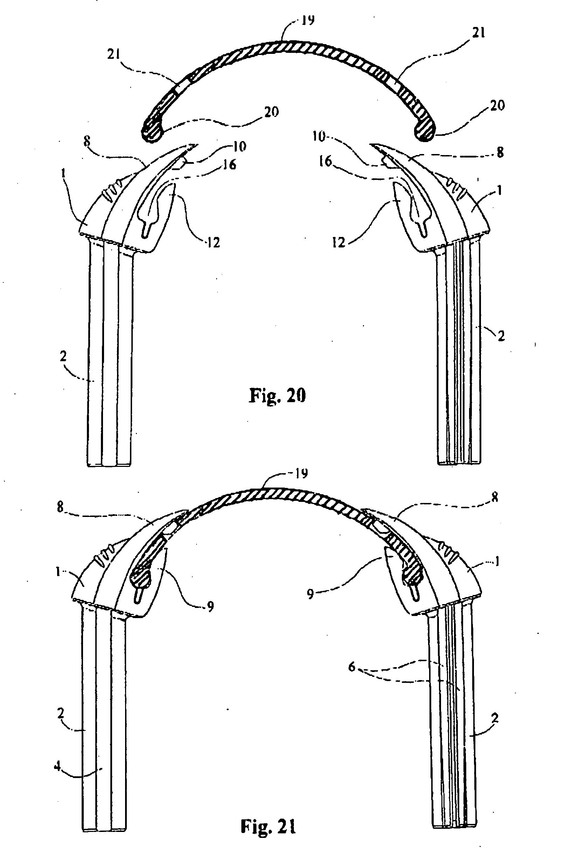

Fig. 20 shows, unassembled, a section of the mudguard on top, in line with the holes which engage the raised part in the mouths of the heads of the elements with a tubular shaft with a longitudinal slit, and below the two elements to be put on the rims of the mudguard.
Fig. 21 shows the assembly, on the rims of the mudguard, of the elements fitted with a tubular shaft as a preliminary stage for the insertion of the upper ends of the mudguard support bracket rods and for the joining of the respective sleeves with internal grooving on the corresponding tubular shafts for gripping the above-mentioned mudguard support bracket rods.

The device of the invention is used in this way.

Taking element 1 with head 8 and shaft 2, mouth 16 is placed against the end of one of the two side edges of the mudguard 19.

The above-mentioned mouth is inserted, whose profile corresponds to the profile of the edge on the side part of the mudguard 19 and it is slid along the above-mentioned rim 20.

When one of the two holes 24 in the mudguard is reached then the raised section 10 of the mouth is inserted into the above-mentioned hole 21.

The grip on the mudguard is ensured by the lower part 12 of the mouth 16 resting on the inside of the mudguard.

In this way the first element of the device is positioned in the correct position of the mudguard 19 identified by the holes that have been made for this purpose.

The sleeve 11 is partially assembled, whose cavity 13 is fitted with the main groove 14 and a secondary groove 15, on the shaft 2.

While the main groove 14 runs over the ribbing 6 of the shaft 2 the secondary groove 15 runs over the guide ribbing 4 which has a protrusion 5. This protrusion 5 acts as a clasp for the sleeve on the shaft, to hold the two elements of the device that is held in static torque in the initial stage of the assembly.

The upper end of the mudguard support bracket rod 18 is inserted into the tubular cavity 7 of shaft 2 of the unit needed to position the mudguard 19 in the correct position with respect to the frame and the wheel.

At this point the operator moves the sleeve 11 forward along shaft 2.

Given the sloping configuration of the sides of the ribbing 6 and the sloping configuration of the sides of the groove 14, the ribbing 6 are forced to come closer to each other, thereby reducing the space of the split that separates them and they bend the elastically pliant structure of the shaft 2, reducing the section of the relative cavity 7.

The rod 18 housed in the cavity 7 is gripped, and therefore prevented from sliding.

To complete the coupling of the sleeve 11 onto the shaft 2 the extension 12, connected to the sleeve 11 and protruding from the upper part, covers part of mouth 9 of the head 8 and clasps with the hook-shaped tip 17 with which it is fitted.

In this way the double grip of the device is effectively carried out both on the mudguard as well as on the mudguard support bracket rod.

## Claims

1. Device for fixing the mudguard of cycles to the upper end of a mudguard support bracket rod, comprising:
- a head element (8) provided with a mouth (16) with an interior profile corresponding to the profile of the outer strip (20, 21) of the mudguard, the head element (8) being provided with a tubular shaft (2); and
- a sleeve element (11);
**characterized in that** said tubular shaft (2) is provided with a longitudinal split fitted with prismatic-shaped protruding exterior ribbing (6) and **in that** said sleeve element (11) has a prismatic-shaped internal longitudinal groove (14) for joining with the tubular shaft (2) with a split protruding ribbing (6).

2. Device for fixing the mudguard of cycles to the upper end of a mudguard support bracket rod according to claim 1 **characterised by** the fact that in the internal upper zone of the mouth (16) of the head (8) there is a cylindrical raised part (10) whose shape and size are compatible with it being inserted into a hole (21) made in line with the outer strips of the mudguard (19).

3. Device for the fixing of the mudguard of cycles to the upper end of a mudguard support bracket rod (18) according to claim 1 **characterised by** the fact that the tubular shaft (2) has a longitudinal split specifically spaced to allow its protruding ribbing (6) to come close together solicited by the engagement with the groove (14) of the sleeve (11).

4. Device for fixing the mudguard of cycles to the upper end of a mudguard support bracket rod according to claim 1 or 3 **characterised by** the fact that the outer flanks of the protruding ribbing (6) of the shaft (2) are diverging, shifting from the parallel to a set angle of inclination.

5. Device for fixing the mudguard of cycles to the upper end of a mudguard support bracket rod according to claim 1 **characterised by** the fact that the sides of the groove (14) of the sleeve (11) are diverging shifting from the parallel with an angle of inclination corresponding to that of the outer flanks of the protruding ribbing (6) of the shaft (2).

6. Device for fixing the mudguard of cycles to the upper end of a mudguard support bracket rod according to claim 5, **characterised by** the fact that the width of the groove (14) of the sleeve (11) with diverging sides is slightly less than the width of the flanks of the protruding ribbing (6) of the shaft (2) that have the same angle of divergence of the sides of the groove (14) of the sleeve (11) so therefore there is the progressive union of the sleeve (11) onto the shaft (2) causing the protruding ribbing (6) to come closer together, as a consequence progressively reducing the cross-section of the tubular cavity (7) of the shaft (2).

7. Device for fixing the mudguard of cycles to the upper end of a mudguard support bracket rod according to one or more of the previous claims **characterised by** the fact that the device creates a uniform grip over all the parts of the mudguard support bracket rod (18) that has been inserted into the tubular shaft (2) because the generators of the tubular cavity (7) are parallel to each other and because the metallic rod (18) is cylindrical.

## Patentansprüche

1. Vorrichtung zum Befestigen des Schutzblechs von Fahrrädern am oberen Ende einer Schutzblechhalter-Tragstange, die umfasst:
- ein Kopfelement (8), das mit einer Öffnung (16) versehen ist, die ein Innenprofil besitzt, das dem Profil des äußeren Streifens (20, 21) des Schutzblechs entspricht, wobei das Kopfelement (8) mit einem rohrförmigen Schaft (2) versehen ist; und
- ein Hülsenelement (11);
**dadurch gekennzeichnet, dass** der rohrförmige Schaft (2) mit einem longitudinalen Schlitz versehen ist, in den eine prismenförmige vorstehende Außenverrippung (6) eingesetzt ist, und dass das Hülsenelement (11) eine prismenförmige innere longitudinale Nut (14) aufweist, um mittels einer in den Schlitz vorstehenden Verrippung (6) mit dem rohrförmigen Schaft (2) verbunden zu werden.

2. Vorrichtung zum Befestigen des Schutzblechs von Fahrrädern am oberen Ende einer Schutzblechhalter-Tragstange nach Anspruch 1, **dadurch gekennzeichnet, dass** in der inneren oberen Zone der Öffnung (16) des Kopfs (8) ein zylindrischer erhöhter Abschnitt (10) vorhanden ist, dessen Form und dessen Größe damit kompatibel sind, dass er in ein Loch (21) eingesetzt werden kann, das ausgerichtet auf den äußeren Streifen des Schutzblechs (19) ausgebildet ist.

3. Vorrichtung zum Befestigen des Schutzblechs von Fahrrädern am oberen Ende einer Schutzblechhalter-Tragstange (18) nach Anspruch 1, **dadurch gekennzeichnet, dass** der rohrförmige Schaft (2) einen longitudinalen Schlitz aufweist, der eine bestimmte Breite besitzt, um seiner vorstehenden Verrippung (6) zu ermöglichen, durch den Eingriff mit der Nut (14) der Hülse (11) enger zusammengedrängt zu werden.

4. Vorrichtung zum Befestigen des Schutzblechs von Fahrrädern am oberen Ende einer Schutzblechhalter-Tragstange nach Anspruch 1 oder 3, **dadurch gekennzeichnet, dass** die äußeren Flanken der vorstehenden Verrippung (6) des Schafts (2) auseinander laufen, indem sie aus der parallelen Orientierung zu einem festgelegten Neigungswinkel verschoben sind.

5. Vorrichtung zum Befestigen des Schutzblechs von Fahrrädern am oberen Ende einer Schutzblechhalter-Tragstange nach Anspruch 1, **dadurch gekennzeichnet, dass** die Seiten der Nut (14) der Hülse (11) auseinander laufen, indem sie aus der parallelen Orientierung zu einem Neigungswinkel verschoben sind, der jenem der äußeren Flanken der vorstehenden Verrippung (6) des Schafts (2) entspricht.

6. Vorrichtung zum Befestigen des Schutzblechs von Fahrrädern am oberen Ende einer Schutzblechhalter-Tragstange nach Anspruch 5, **dadurch gekennzeichnet, dass** die Breite der Nut (14) der Hülse (11) mit auseinander laufenden Seiten etwas geringer ist als die Breite der Flanken der vorstehenden Verrippung (6) des Schafts (2), die den gleichen Divergenzwinkel wie die Seiten der Nut (14) der Hülse (11) besitze, weshalb eine progressive Vereinigung der Hülse (11) mit dem Schaft (2) erfolgt, wodurch die vorstehende Verrippung (6) näher zusammengedrängt wird, mit der Folge, dass der Querschnitt des rohrförmigen Hohlraums (7) des Schafts (2) progressiv verringert wird.

7. Vorrichtung zum Befestigen des Schutzblechs von Fahrrädern am oberen Ende einer Schutzblechhalter-Tragstange nach einem oder mehreren der vorhergehenden Ansprüche, **dadurch gekennzeichnet, dass** die Vorrichtung über alle Abschnitte der Schutzblechhalter-Tragstange (18), die in den rohrförmigen Schaft (2) eingesetzt worden sind, einen gleichmäßigen Griff erzeugt, das die Erzeugenden des rohrförmigen Hohlraums (7) zueinander parallel sind und da die Metallstange (18) zylindrisch ist.

## Revendications

1. Dispositif pour fixer le garde-boue de bicyclettes sur l'extrémité supérieure d'une tige de support de garde-boue, comprenant :
- un élément de tête (8) muni d'une embouchure (16) ayant un profil intérieur correspondant au profil de la bande extérieure (20, 21) du garde-boue, l'élément de tête (8) étant muni d'un axe tubulaire (2) ; et
- un élément de manchon (11) ;
**caractérisé en ce que** ledit axe tubulaire (2) comprend une fente longitudinale munie d'un nervurage extérieur en saillie de forme prismatique (6) et **en ce que** ledit élément de manchon (11) a une gorge longitudinale intérieure de forme prismatique (14) pour un assemblage avec l'axe tubulaire (2) à l'aide d'un nervurage fendu en saillie (6).

2. Dispositif pour fixer le garde-boue de bicyclettes sur l'extrémité supérieure d'une tige de support de garde-boue selon la revendication 1, **caractérisé par le fait que** dans la zone supérieure intérieure de l'embouchure (16) de la tête (8) est agencée une partie cylindrique levée (10) dont la forme et la taille sont compatibles avec son insertion dans un trou (21) fabriqué dans l'alignement des bandes extérieures du garde-boue (19).

3. Dispositif pour la fixation du garde-boue de bicyclettes sur l'extrémité supérieure d'une tige de support de garde-boue (18) selon la revendication 1, **caractérisé par le fait que** l'axe tubulaire (2) a une fente longitudinale spécifiquement espacée pour permettre à son nervurage en saillie (6) de se rapprocher sous l'action du contact avec la gorge (14) du manchon (11).

4. Dispositif pour fixer le garde-boue de bicyclettes sur l'extrémité supérieure d'une tige de support de garde-boue selon la revendication 1 ou 3, **caractérisé par le fait que** les flancs extérieurs du nervurage en saillie (6) de l'axe (2) divergent en passant de la parallèle à un angle d'inclinaison défini.

5. Dispositif pour fixer le garde-boue de bicyclettes sur l'extrémité supérieure d'une tige de support de garde-boue selon la revendication 1, **caractérisé par le fait que** les côtés de la gorge (14) du manchon (11) divergent en passant de la parallèle à un angle d'inclinaison correspondant à celui des flancs extérieurs du nervurage en saillie (6) de l'axe (2).

6. Dispositif pour fixer le garde-boue de bicyclettes sur l'extrémité supérieure d'une tige de support de garde-boue selon la revendication 5, **caractérisé par le fait que** la largeur de la gorge (14) du manchon (11) ayant des côtés divergents est légèrement inférieure à la largeur des flancs du nervurage en saillie (6) de l'axe (2) qui ont le même angle de divergence que les côtés de la gorge (14) du manchon (11) de sorte qu'il y a ainsi l'union progressive du manchon (11) sur l'axe (2) qui cause un rapprochement du nervurage en saillie (6), et donc une réduction progressive de la section transversale de la cavité tubulaire (7) de la tige (2).

7. Dispositif pour fixer le garde-boue de bicyclettes sur l'extrémité supérieure d'une tige de support de garde-boue selon une ou plusieurs des revendications précédentes, **caractérisé par le fait que** le dispositif crée une prise uniforme sur toutes les parties de la tige de support de garde-boue (18) qui a été insérée dans l'axe tubulaire (2) du fait que les génératrices de la cavité tubulaire (7) sont parallèles les unes aux autres et du fait que la tige métallique (18) est cylindrique.
